# EUROPEAN PATENT SPECIFICATION

(11) **EP 4 175 041 B1**
(45) Date of publication and mention of the grant of the patent: **07.05.2025**
(21) Application number: 21917939.7
(22) Date of filing: 24.12.2021
(51) Int. Cl.: H01M 50/383, H01M 50/358, H01M 50/249, H01M 50/367, H01M 50/262

(54) **BATTERY MODULE, BATTERY PACK, AND VEHICLE**
BATTERIEMODUL, BATTERIEPACK UND FAHRZEUG
MODULE DE BATTERIE, BLOC-BATTERIE ET VÉHICULE

(30) Priority: 11.01.2021 KR 20210003199
(43) Date of publication of application: 03.05.2023
(73) Proprietor: LG Energy Solution, Ltd., Seoul 07335 (KR)
(72) Inventor: RYU, Sang-Woo, Daejeon 34122 (KR); JO, Jong-Hyun, Daejeon 34122 (KR); CHOI, Yong-Seok, Daejeon 34122 (KR)
(74) Representative: Plasseraud IP
(86) International application number: PCT/KR2021/019894
(87) International publication number: WO 2022/149778

(56) References cited:
- EP-A1- 3 965 221
- WO-A1-2018/123573
- JP-A- 2015 133 266
- JP-A- 2016 062 757
- KR-A- 20120 090 027
- KR-A- 20170 090 261
- KR-B1- 101 323 919
- KR-B1- 101 998 224
- US-A1- 2020 287 194

## Description

### TECHNICAL FIELD

The present disclosure relates to a battery module and a battery pack and a vehicle comprising the same, and more particularly, to a battery module with improved safety from fire or explosion.

The present application claims the benefit of Korean Patent Application No. 10-2021-0003199 filed on January 11, 2021 with the Korean Intellectual Property Office.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance battery cells that can be recharged repeatedly.

Currently, commercially available battery cells include nickel-cadmium batteries, nickel-hydrogen batteries, nickel-zinc batteries, lithium battery cells and the like, and among them, lithium battery cells have little or no memory effect, and thus they are gaining more attention than nickel-based battery cells for their advantages that recharging can be done whenever it is convenient, the self-discharge rate is very low and the energy density is high.

The lithium battery cell primarily includes a lithium-based oxide and a carbon material for a positive electrode active material and a negative electrode active material, respectively. Additionally, the lithium battery cell includes an electrode assembly including a positive electrode plate and a negative electrode plate coated with the positive electrode active material and the negative electrode active material, respectively, with a separator interposed between the positive electrode plate and the negative electrode plate, and a packaging material or a battery case in which the electrode assembly is hermetically received together with an electrolyte solution.

Additionally, the lithium battery cell may be classified into a can type battery cell including the electrode assembly embedded in a metal can and a pouch type battery cell including the electrode assembly embedded in a pouch of an aluminum laminate sheet according to the shape of the packaging material.

In particular, recently, there is a growing demand for high capacity battery modules for use in electric vehicles. The high capacity battery module includes a plurality of battery cells, and when a fire or explosion occurs in the plurality of battery cells, as flame and high temperature gas is released, the explosion causes the fire to spread to the other battery modules in the vehicle, or adjacent other devices may be damaged or passengers may be injured. Accordingly, there is a need for an approach to increase the safety of the battery module from fires or gas explosions. JP2016062757A and JP2015133266A disclose arrangements with passages for effluents as to increase safety in operation.

### DISCLOSURE

### Technical Problem

The present disclosure is designed to solve the above-described problem, and therefore the present disclosure is directed to providing a battery module with improved safety from fire or explosion.

These and other objects and advantages of the present disclosure may be understood by the following description, and will be apparent from the embodiments of the present disclosure. In addition, it will be readily appreciated that the objects and advantages of the present disclosure may be realized by means set forth in the appended claims and combinations thereof.

### Technical Solution

To achieve the above-described object, a battery module according to the present disclosure includes a cell assembly including a plurality of battery cells; a lower case having an open top and an accommodation space in which the cell assembly is received; an upper case which is coupled to the lower case to cover the open top of the lower case, the upper case having a connection hole in communication with the accommodation space; an upper cover which is coupled to the upper case to cover the top of the upper case, wherein part of the upper cover is spaced apart from the upper case to form a buffer space, and the upper cover has an outlet in communication with the buffer space; and a partition which is provided in the buffer space, the partition having at least part extended to form a movement passage which extends from the connection hole to the outlet, and configured to adjust an extension direction of the part.

Additionally, the partition includes a barrier which is extended in at least one direction; and a hinge which is hinge-coupled to an end of the barrier to allow the barrier to rotatably move.

Additionally, the partition further includes an extension part configured to protrude in at least one direction from the barrier, and the barrier may include an accommodation groove which has a space into which the extension part is inserted and configured to allow the extension part to move in a protrusion direction when the extension part is inserted into the accommodation groove.

Additionally, the battery module may include at least two partitions, and the partition may include at least one coupling groove in at least part thereof, and at least one coupling protrusion which is inserted into the coupling groove formed in the hinge of the other partition at an end of a protrusion direction of the extension part.

Additionally, at least one of the upper cover or the upper case may have an insert groove into which an end of an extension direction of the barrier is inserted.

Additionally, at least one of the upper cover or the upper case may have a mount groove into which a top or bottom of the partition is inserted.

Additionally, the battery module may include at least two partitions, any one of the at least two partitions may be extended in a direction to form the movement passage, and the other partition may be coupled to an end of the any one partition and may be extended a direction perpendicular to an extension direction of the any one partition.

Additionally, the battery module may include at least two partitions, the at least two partitions may be spaced a predetermined distance apart in the buffer space, and any one of the at least two partitions may be spaced a predetermined distance apart from a surface of the buffer space, and the other partition may be spaced a predetermined distance apart from the other surface of the buffer space.

Furthermore, to achieve the above-described object, a battery pack according to the present disclosure may include at least one battery module.

Further, to achieve the above-described object, a vehicle according to the present disclosure may include at least one battery pack.

### Advantageous Effects

According to an aspect of the present disclosure, the present disclosure forms the buffer space inside by the upper cover and the upper case, and besides, forms the movement passage for movement of gas and flame in the buffer space, and includes the partition having part configured to adjust the extension direction, and thus in case of an explosion or fire in the plurality of battery cells of the cell assembly of the battery module, flame goes out by the interference or contact with a coupler during the movement of the generated flame and gas along the movement passage of the buffer space, and the pressure of the generated gas may be effectively reduced. Ultimately, the battery module of the present disclosure may effectively reduce external damage of the plurality of battery cells caused by the explosion or fire, and greatly increase the safety of the battery module.

Moreover, according to an aspect of the present disclosure, since the partition of the present disclosure includes the extension part configured to protrude from the barrier to further extend the movement passage, and the accommodation groove in which the extension part is received, it is possible to form the movement passage of the same length in the buffer space using a smaller number of partitions. That is, when the battery capacity of the battery module is relatively low, in case of fire or explosion, the power of explosion may be relatively low, and thus it is possible to reduce the number of partitions that form the movement passage for movement of flame and gas. That is, the battery module of the present disclosure may form the movement passage of the same length using a relatively small number of partitions, thereby effectively reducing the number of components and the fabrication cost of the battery module.

### DESCRIPTION OF DRAWINGS

The accompanying drawings illustrate a preferred embodiment of the present disclosure, and together with the following detailed description, serve to provide a further understanding of the technical aspects of the present disclosure, and thus the present disclosure should not be construed as being limited to the drawings.
FIG. 1 is a schematic perspective view showing a battery module according to an embodiment of the present disclosure.
FIG. 2 is a schematic exploded perspective view showing some components of a battery module according to an embodiment of the present disclosure.
FIG. 3 is a schematic exploded perspective view showing some components of a battery module according to an embodiment of the present disclosure.
FIG. 4 is a schematic exploded perspective view showing some components of a battery module according to an embodiment of the present disclosure.
FIG. 5 is a schematic exploded perspective view showing some components of a battery module according to an embodiment of the present disclosure.
FIG. 6 is a schematic perspective view showing some components of a battery module according to an embodiment of the present disclosure.
FIG. 7 is a schematic bottom perspective view showing an upper cover of a battery module according to an embodiment of the present disclosure.
FIG. 8 is a schematic perspective view showing a partition of a battery module according to an embodiment of the present disclosure.
FIG. 9 is a schematic exploded perspective view showing a partition of a battery module according to an embodiment of the present disclosure.
FIG. 10 is a schematic perspective view showing a modified partition of a battery module according to an embodiment of the present disclosure.
FIG. 11 is a schematic assembled perspective view showing partitions of a battery module according to an embodiment of the present disclosure.
FIG. 12 is a schematic perspective view showing modified partitions of a battery module according to an embodiment of the present disclosure.
FIG. 13 is a schematic perspective view showing some components of a battery module according to another embodiment of the present disclosure.
FIG. 14 is a schematic perspective view showing some components of a battery module according to still another embodiment of the present disclosure.

### BEST MODE

Hereinafter, a preferred embodiment of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

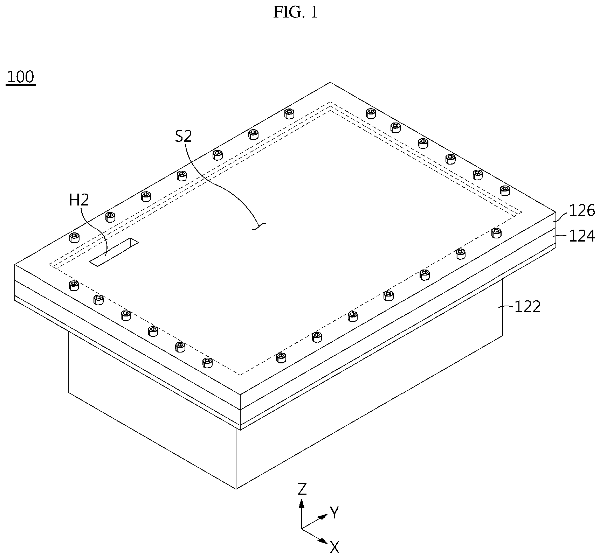

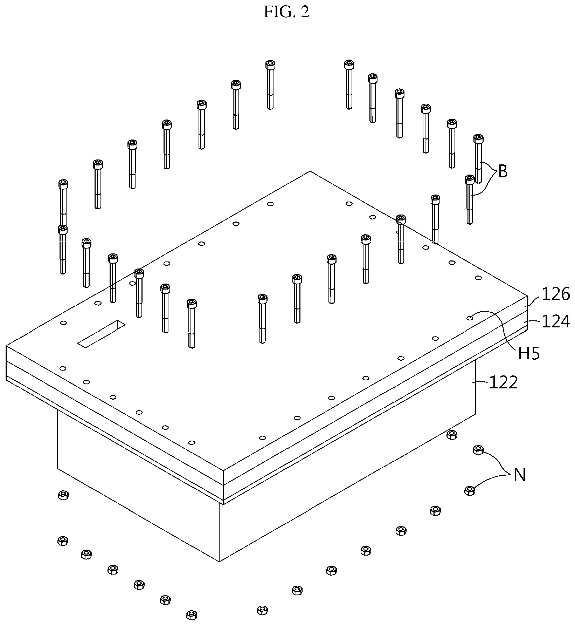

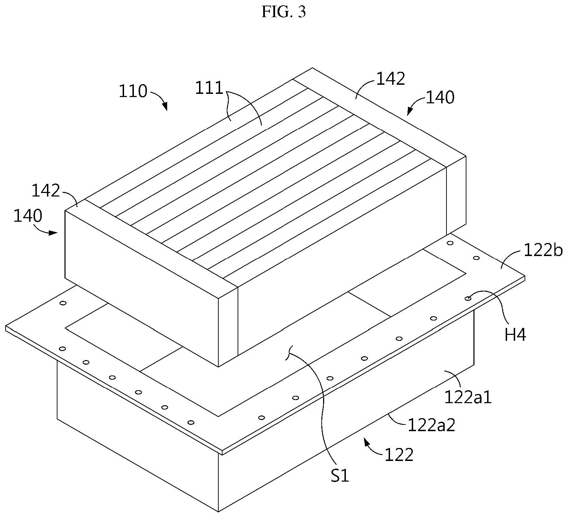

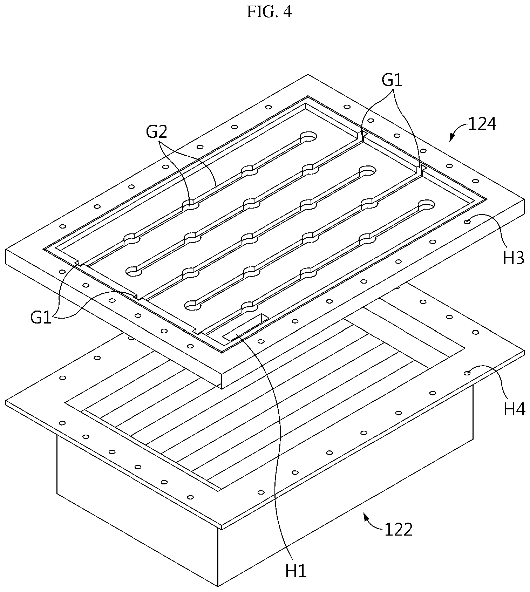

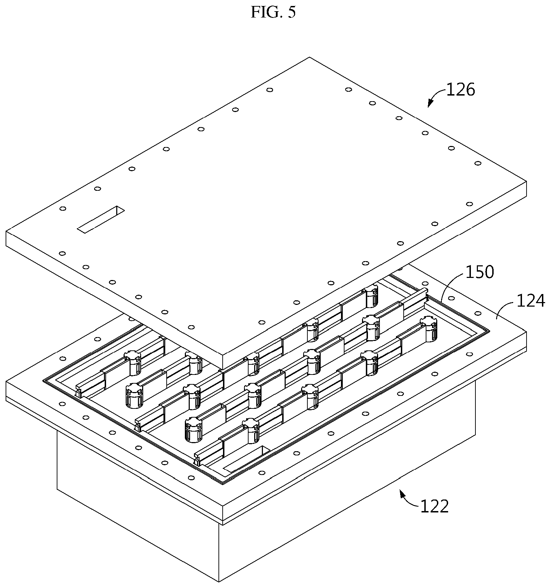

FIG. 1 is a schematic perspective view showing a battery module according to an embodiment of the present disclosure. FIG. 2 is a schematic exploded perspective view showing some components of the battery module according to an embodiment of the present disclosure. FIG. 3 is a schematic exploded perspective view showing some components of the battery module according to an embodiment of the present disclosure. FIG. 4 is a schematic exploded perspective view showing some components of the battery module according to an embodiment of the present disclosure. Additionally, FIG. 5 is a schematic exploded perspective view showing some components of the battery module according to an embodiment of the present disclosure. For reference, in FIG. 1, the front-rear direction represents the positive direction and the negative direction of the Y axis, the left-right direction represents the positive direction and the negative direction of the X axis, and the up-down direction represents the positive direction and the negative direction of the Z axis.

Referring to FIGS. 1 to 5, the battery module 100 according to an embodiment of the present disclosure includes a cell assembly 110 including a plurality of battery cells 111, a lower case 122, an upper case 124, an upper cover 126 and at least one partition 130.

Specifically, the battery cell 111 may be, for example, a pouch type battery cell. For example, as shown in FIG. 3, the cell assembly 110 may include the plurality of battery cells 111 stacked side by side in a direction (X axis direction). For example, the battery cell 111 may include an electrode lead (not shown) at each of the front end and rear end. For example, the battery cell 111 may include a positive electrode lead at the front end and a negative electrode lead at the rear end.

However, in the battery module 100 according to the present disclosure, the battery cell 111 is not limited to the above-described pouch type battery cell 111 and may include various types of battery cells 111 known at the time of filing the application. For example, the battery cell 111 may be a prismatic battery cell having a 6-sided packaging case.

Additionally, a busbar assembly 140 may be provided on each of the front side and the rear side of the cell assembly 110. The busbar assembly 140 may be configured to electrically connect the plurality of battery cells 111. For example, the busbar assembly 140 may include busbars (not shown) configured to come into contact with the electrode leads of the plurality of battery cells 111, and a busbar frame 141 configured to mount the busbars thereon. The busbars may include a metal, for example, aluminum, copper and nickel. The busbar frame 141 may include, for example, an electrical insulating material. The electrical insulating material may be, for example, polyvinyl chloride.

Moreover, the lower case 122 may have an accommodation space S1 in which the cell assembly 110 is received. That is, the lower case 122 may have a rectangular box shape with open top. For example, as shown in FIG. 2, the lower case 122 may include a side wall 122a1 in the horizontal direction and a lower wall 122a2 coupled to the bottom of the side wall 122a1 to form the accommodation space S1 in a corresponding size to the cell assembly 110. The lower case 122 may include a flange 122b that extends in the horizontal direction from the top of the side wall 122a1. The flange 122b may have a plurality of second bolt holes H4 at a predetermined interval along the outer periphery. The flange 122b may be bolt-coupled to the upper case 124 through the second bolt hole H4. For reference, the 'horizontal direction' as used herein refers to any one direction parallel to the ground.

Additionally, the upper case 124 may have a plate shape that extends in the horizontal direction to cover the open top of the lower case 122. The upper case 124 may be configured to be coupled to the flange 122b of the lower case 122. To this end, the upper case 124 may have a plurality of first bolt holes H3 on the outer periphery of the horizontal direction. The upper case 124 may be also configured to be coupled to the upper cover 126.

Further, as shown in FIG. 5, the upper case 124 may include a gasket 150 on top. The gasket 150 may be configured to prevent the release of gas through the coupling surface between the upper case 124 and the upper cover 126. That is, the gasket 150 may be interposed between the upper case 124 and the upper cover 126.

Additionally, as shown in FIG. 2, the upper cover 126 may have a plate shape that extends in the horizontal direction to cover the top of the upper case 124. The upper cover 126 may have a plurality of third bolt holes H5 spaced apart at a predetermined interval on the outer periphery of the horizontal direction.

For example, as shown in FIGS. 1 and 2, the upper case 124 may be coupled to the top of the upper cover 126, and the outer periphery of the upper case 124 may be coupled to the flange 122b of the lower case 122. In this instance, a plurality of bolts B may pass through each of the third bolt holes H5 of the upper cover 126, the first bolt hole H3 of the upper case 124 and the second bolt hole H4 of the lower case 122. The bolts B may be screw-coupled to the bolt holes H3, H4, H5. Alternatively, the bolts B may be inserted into the bolt holes H3, H4, H5, and nuts N may be inserted into the body protruding downwards from the lower surface of the flange 122b of the lower case 122 to fasten and secure.

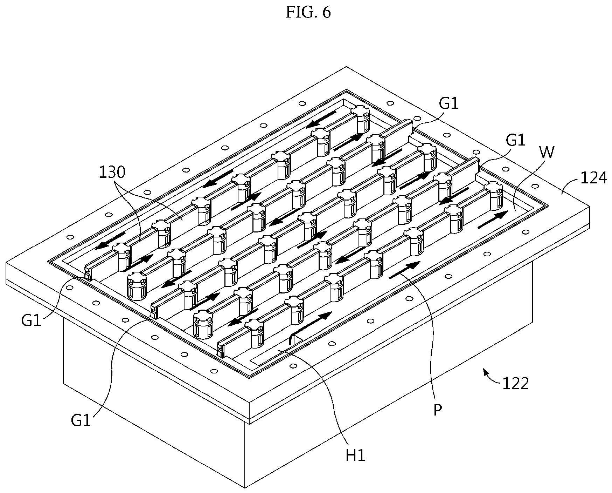

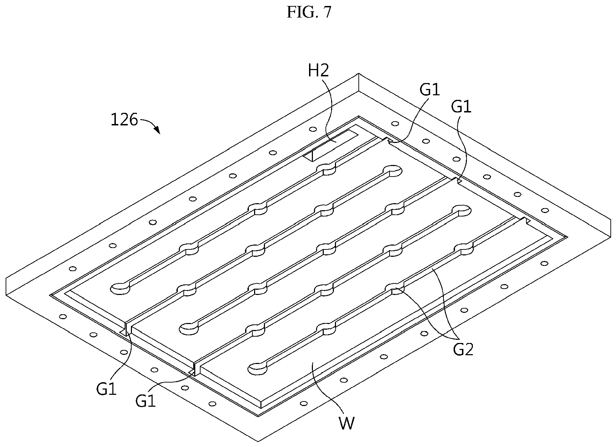

FIG. 6 is a schematic perspective view showing some components of the battery module according to an embodiment of the present disclosure. Additionally, FIG. 7 is a schematic bottom perspective view showing the upper cover of the battery module according to an embodiment of the present disclosure. For reference, FIG. 7 is a bottom perspective view of the upper cover 126 when viewed from the left direction.

Referring to FIGS. 6 and 7 together with FIG. 1, part of the upper case 124 may be open to form a connection hole H1 in communication with the accommodation space S1. Part of the lower case 122 may be spaced apart from the upper case 124 to form a buffer space S2. For example, the buffer space S2 may be a space that is recessed from at least one of the upper case 124 or the upper cover 126 on a surface of contact between the upper case 124 and the upper cover 126. For example, part of the lower surface of the upper cover 126 may have an upward recess W to form the buffer space (S2 in FIG. 1), and part of the upper surface of the upper case 124 may have a downward recess W.

Additionally, part of the upper cover 126 may be open to form an outlet H2 for the communication of the buffer space S2 with the outdoor environment. That is, in case that gas and flame is generated from the cell assembly 110 due to thermal runaway or fire in the cell assembly 110, the battery module 100 of the present disclosure may cause the generated gas and flame to move from the accommodation space S1 to the buffer space S2 through the connection hole H1 of the upper case 124. The flame returning to the buffer space S2 may go out, and the cooled gas may be released through the outlet H2 of the upper cover 126.

Moreover, at least one partition 130 may be provided in the buffer space S2. The partition 130 may be configured to form a movement passage P that extends from the connection hole H1 to the outlet H2 in the buffer space S2. That is, the partition 130 may be configured to divide the buffer space S2. The partition 130 may be horizontally extended in the buffer space S2.

For example, as shown in FIG. 6, 35 partitions 130 may be mounted on the upper case 124. The 35 partitions 130 may form five groups, each including seven partitions 130 coupled to each other. The five groups may be spaced a predetermined distance apart in the left-right direction (X axis direction). The seven partitions 130 in a group may be arranged in the front-rear direction (Y axis direction). In this instance, the front and rear ends of each of the seven partitions 130 may be coupled to the other partitions 130. That is, the partitions 130 may prevent the generated gas or flame from moving in the left-right direction (X axis direction) directly from the buffer space S2, and may guide the gas and flame to move to the outlet H2 by the front-rear movements (Y axis direction) in an alternating manner multiple times. Accordingly, the present disclosure may reduce the temperature of high temperature gas to the maximum extent and maximize the movement path of gas and flame in the buffer space S2 to induce the flame to go out by itself.

For example, as shown in FIG. 6, the present disclosure may include at least two partitions 130. For example, the battery module 100 of the present disclosure may include 35 partitions 130. The at least two partitions 130 may be spaced a predetermined distance apart in the buffer space S2. For example, as shown in FIG. 6, seven partitions 130 may be coupled to each other to form a group, and five groups may be spaced apart in the left-right direction (X axis direction).

Additionally, any one of the at least two partitions 130 may be positioned on one side (front side) of the buffer space S2 with respect to the center, and the remaining partition 130 may be positioned on the other side (rear side) of the buffer space S2. In other words, any one of the at least two partitions 130 may be spaced a predetermined distance apart from one surface of the buffer space S2, and the remaining partition 130 may be spaced a predetermined distance apart from the other surface of the buffer space S2. For example, as shown in FIG. 6, one of the five groups of partitions 130 may be positioned on the front side in the buffer space S2, spaced the predetermined distance apart from the rear surface of the buffer space S2, and the remaining group may be positioned on the rear side in the buffer space S2, spaced the predetermined distance apart from the front surface of the buffer space S2.

That is, as shown in FIG. 6, when the movement passage P of the buffer space S2 is set in a zigzag pattern, the battery module 100 may include any one partition 130 at one end (the front end) of the buffer space S2 to form the passage through which gas or flame passes at the other end (the rear end) of the buffer space S2, and the adjacent other partition 130 at the other end (the rear end) of the buffer space S2 to form the passage through which gas or flame passes at one end (the front end) of the buffer space S2.

Additionally, the partition 130 may be disposed in the buffer space S2. The partition 130 may have at least part extended to form the movement passage P that extends from the connection hole H1 to the outlet H2. For example, as shown in FIG. 6, in the battery module 100 of the present disclosure, seven partitions 130 may form a group. The seven partitions 130 may be coupled to each other and extended in the horizontal direction. For example, as shown in FIG. 6, the partition 130 may be extended in the front-rear direction. However, the extension direction of the partitions 130 is not limited to the front-rear direction, and some of the plurality of partitions 130 may be extended in the left-right direction and the remaining partitions may be extended in the front-rear direction.

Further, the partition 130 may be configured to adjust the direction in which the above-described part is extended. For example, the partition 130 may be positioned such that the above-described part is extended in the left-right direction. Alternatively, the partition 130 may be positioned such that the above-described part is extended in the front-rear direction. For example, as shown in FIG. 6, the partition 130 may be positioned such that the above-described part is extended in the front-rear direction.

Accordingly, according to this configuration of the present disclosure, the present disclosure forms the buffer space S2 inside by the upper cover 126 and the upper case 124, and besides, forms the movement passage P for movement of gas and flame in the buffer space S2 and includes the partition 130 having the part configured to adjust the extension direction, and thus in case of explosion or fire in the plurality of battery cells 111 of the cell assembly 110 of the battery module 100, flame goes out by the interference or contact with a fastener 160 during the movement of the generated flame and gas along the movement passage P of the buffer space S2, and the pressure of the generated gas is effectively reduced. Ultimately, the battery module 100 of the present disclosure may effectively reduce external damage caused by explosion or fire in the plurality of battery cells 111 and greatly increase safety of the battery module 100.

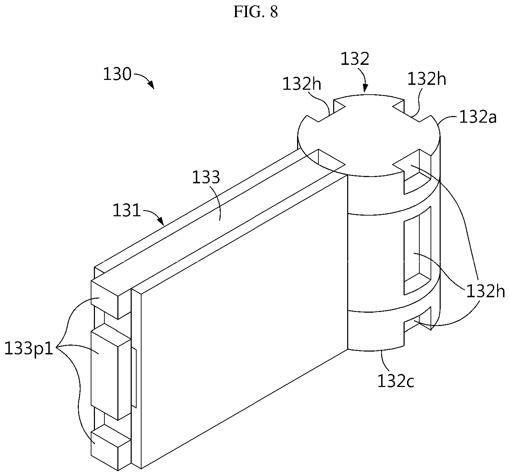

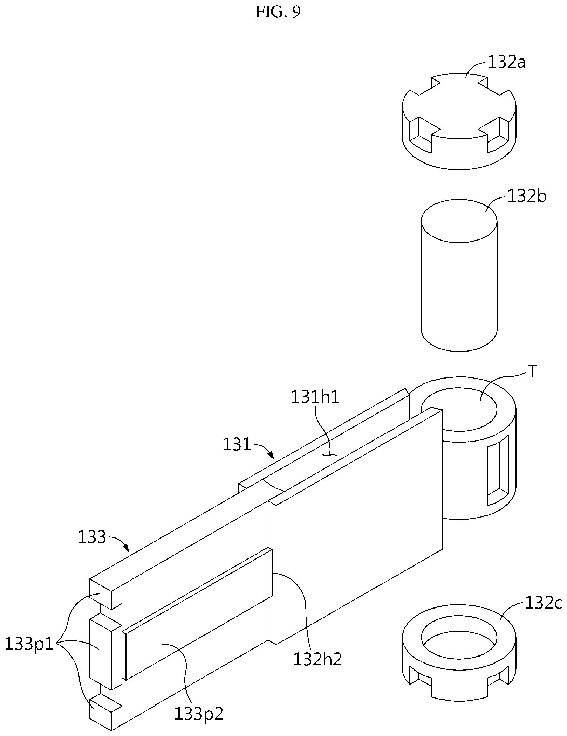

FIG. 8 is a schematic perspective view showing the partition of the battery module according to an embodiment of the present disclosure. Additionally, FIG. 9 is a schematic exploded perspective view showing the partition of the battery module according to an embodiment of the present disclosure.

Referring to FIGS. 8 and 9 together with FIG. 6, the partition 130 includes a barrier 131 and a hinge 132. Specifically, the barrier 131 may be extended in at least one direction. For example, as shown in FIG. 6, the barrier 131 may be extended in the front-rear direction. The barrier 131 may have a block shape that extends in the up-down direction and in the front-rear direction.

Additionally, the hinge 132 may be hinge-coupled to the barrier 131 to allow the barrier 131 to rotatably move. The hinge 132 may be hinge-coupled to an end of the barrier 131. The hinge 132 may include an upper cap 132a, a pillar 132b and a lower cap 132c. In this instance, the barrier 131 may be hinge-coupled to the pillar 132b. The barrier 131 may have a hollow T into which the pillar 132b is vertically inserted. That is, when the pillar 132b is inserted into the hollow T, the barrier 131 may be configured to rotatably move along the outer surface of the pillar 132b.

Moreover, the upper cap 132a may be configured to be coupled to the top of the pillar 132b. For example, an upward recessed groove may be formed on bottom of the upper cap 132a for the insertion of the top of the pillar 132b. The lower cap 132c may be configured to be coupled to the bottom of the pillar 132b. For example, a downward recessed groove may be formed on top of the lower cap 132c for the insertion of the bottom of the pillar 132b.

Accordingly, according to this configuration of the present disclosure, since the partition 130 of the present disclosure includes the barrier 131 and the hinge 132 hinge-coupled to the barrier 131, it is possible to form the movement passage P extended in various directions in the buffer space S2 by coupling the plurality of partitions 130 to each other. That is, using the plurality of partitions 130, it is possible to form the movement passage P such that part of the movement passage P is extended in the front-rear direction, and the other part is extended in the left-right direction in the buffer space S2. As described above, it is possible to set the shape of the movement passage P for movement of gas or flame depending on the battery capacity of the battery module 100 and the shape of the case, and thus there is no need to newly design the partition 130 each time a new battery module 100 is fabricated, thereby effectively reducing the fabrication cost and time. That is, the partition 130 of the present disclosure may be applied to all the battery modules 100 of various capacities, and thus component standardization is easy and straightforward.

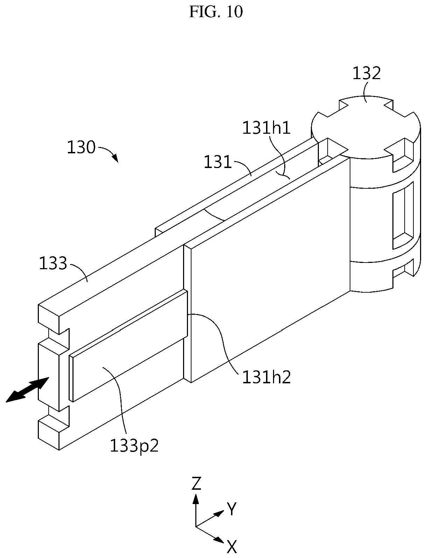

FIG. 10 is a schematic perspective view showing the modified partition of the battery module according to an embodiment of the present disclosure.

Referring to FIG. 10 together with FIGS. 8 and 9, the partition 130 further includes an extension part 133 configured to protrude in at least one direction from the barrier 131. The extension part 133 may have a convex shape that extends in one direction (protrusion direction) of the vertical direction and the horizontal direction in the same way as the barrier 131. That is, the extension part 133 is configured to protrude in the same direction as the extension direction of the barrier 131. For example, as shown in FIG. 10, the partition 130 may include the barrier 131 positioned in the front-rear direction (Y axis direction) and the extension part 133 positioned to protrude in the front direction (Y axis negative direction) from the barrier 131.

Additionally, the barrier 131 has an accommodation groove 131h1 configured to accommodate the extension part 133. The accommodation groove 131h1 has a space into which the extension part 133 may be inserted. That is, the accommodation groove 131h1 may be open to a horizontal side, and top and bottom. The extension part 133 may be inserted into the inner space from one side of the horizontal direction of the accommodation groove 131h1. The accommodation groove 131h1 is configured to move in the protrusion direction of the extension part 133 when the extension part 133 is inserted into the accommodation groove 131h1. For example, as shown in FIG. 10, the accommodation groove 131h1 may be configured to move in the front-rear direction when the extension part 133 is inserted into the accommodation groove 131h1.

In this instance, the accommodation groove 131h1 and the extension part 133 may include a slide groove 131h2 and a slide protrusion 133p2, respectively. The slide protrusion 133p2 may slidably move in a direction (for example, in the front-rear direction) in the slide groove 131h2 by female-male coupling of the slide groove 131h2 and the slide protrusion 133p2.

Accordingly, according to this configuration of the present disclosure, since the partition 130 of the present disclosure includes the extension part 133 configured to protrude from the barrier 131 to further extend the movement passage P and the accommodation groove 131h1 in which the extension part 133 is accommodated, it is possible to form the movement passage P of the same length in the buffer space S2 using a smaller number of partitions 130. That is, when the battery capacity of the battery module 100 is relatively low, in case of fire or explosion, the power of explosion may be relatively low, and thus it is possible to reduce the number of partitions 130 that form the movement passage P for movement of flame and gas. That is, the battery module 100 of the present disclosure may form the movement passage P of the same length using a relatively small number of partitions 130, thereby effectively reducing the number of components and the fabrication cost of the battery module 100.

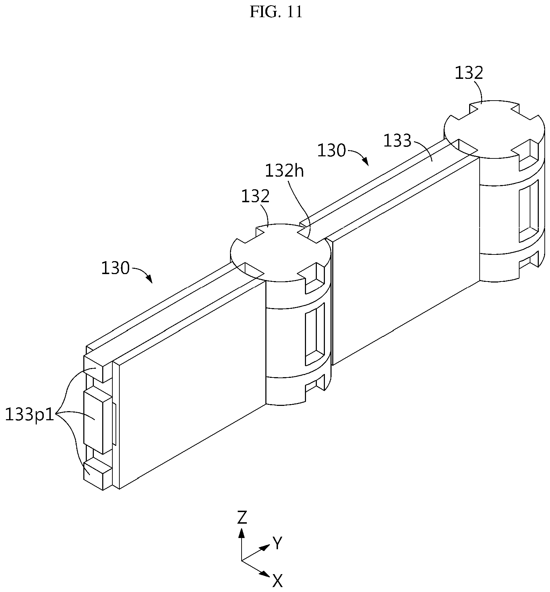

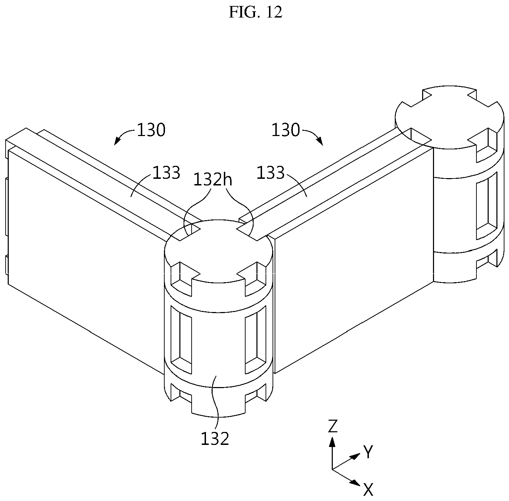

FIG. 11 is a schematic assembled perspective view showing the partitions of the battery module according to an embodiment of the present disclosure. FIG. 12 is a schematic perspective view showing the modified partitions of the battery module according to an embodiment of the present disclosure.

Referring to FIGS. 11 and 12 together with FIG. 8, when the battery module 100 includes at least two partitions 130, the at least two partitions 130 coupled to each other may be positioned in the buffer space S2. For example, as shown in FIG. 11, the at least two partitions 130 may be extended in the front-rear direction (Y axis direction) and coupled to each other. Additionally, in another embodiment, for example, as shown in FIG. 12, one of the at least two partitions 130 may be extended in the front-rear direction (Y axis direction), and the other partition 130 may be extended in the left-right direction (X axis direction) perpendicular to the partition 130.

In this instance, the partition 130 may have at least one coupling groove 132h. The extension part 133 may have a coupling protrusion 133p1 configured to be inserted into the coupling groove 132h. That is, the coupling protrusion 133p1 may be configured to be inserted into the coupling groove 132h formed at each of the upper cap 132a and the lower cap 132c, and part of the barrier 131 of the other partition 130 at the end of the protrusion direction of the extension part 133. The coupling groove 132h may be a recessed part of the body. The recessed shape of the coupling groove 132h may be formed in a corresponding shape to part of the coupling protrusion 133p1.

Accordingly, according to this configuration of the present disclosure, since the partition 130 of the present disclosure includes the coupling groove 132h and the coupling protrusion 133p1 configured to be inserted into the coupling groove 132h, it is possible to easily form the movement passage P by female-male coupling of the plurality of partitions 130, thereby assembling in a quick and straightforward manner. Accordingly, it is possible to greatly increase the fabrication efficiency of the battery module 100.

Meanwhile, referring back to FIGS. 4, 6 and 7, at least one of the upper cover 126 or the upper case 124 of the battery module 100 of the present disclosure may have an insert groove G1. The insert groove G1 may be configured such that the end of the extension direction of the extension part 133 is inserted into the insert groove G1. That is, the insert groove G1 may be configured such that the end of the protrusion direction of the extension part 133 is inserted into the insert groove G1.

For example, as shown in FIG. 6, each of the extension parts 133 provided in three out of five partitions 130 may be inserted into the insert groove G1 provided on the front side of the upper case 124. Each of the extension parts 133 provided in the remaining two partitions 130 may be inserted into the insert groove G1 provided on the rear side of the upper case 124. Additionally, although not shown, each of the extension parts 133 provided in three out of five partitions 130 may be inserted into the insert groove G1 provided on the front side of the upper cover 126. Each of the extension parts 133 provided in the remaining two partitions 130 may be inserted into the insert groove G1 provided on the rear side of the upper cover 126.

Accordingly, according to this configuration of the present disclosure, the present disclosure may limit the left-right direction movement of the partition 130 by the insert groove G1 formed in at least one of the upper cover 126 or the upper case 124. That is, the present disclosure may stably hold the partition 130 received in the buffer space S2, thereby stably maintaining the position of the partition 130 in case of explosion of the cell assembly 110.

Referring back to FIGS. 4, 6 and 7, at least one of the upper cover 126 or the upper case 124 may have a mount groove G2 into which the top or bottom of the partition 130 is inserted. Specifically, at least one of the upper cover 126 or the upper case 124 may have the mount groove G2 into which the top or bottom of each of the barrier 131 and the hinge 132 is inserted. For example, as shown in FIG. 4, the upper case 124 may have the mount groove G2 into which the bottom of the barrier 131 and the hinge 132 of the partition 130 is inserted. The mount groove G2 of the upper case 124 may be recessed upwards. The mount groove G2 may have a rectangular shape that extends in the front-rear direction on the plane, into which the bottom of the plurality of barriers 131 is inserted, and multiple circular shapes into which the bottom of the plurality of hinges 132 is inserted.

Additionally, the upper cover 126 may have the mount groove G2 into which the top of the barrier 131 and the hinge 132 of the partition 130 is inserted. The mount groove G2 of the upper cover 126 may be recessed upwards. The mount groove G2 may have a rectangular shape that extends in the front-rear direction on the plane, into which the top of the barrier 131 is inserted, and multiple circular shapes into which the top of the hinge 132 is inserted.

Accordingly, according to this configuration of the present disclosure, the present disclosure may hold the end of the partition 130 in the left-right direction by the mount groove G2. Accordingly, it is possible to effectively prevent the partition 130 from moving from the right position by the pressure of the generated gas in case of internal explosion of the battery module 100.

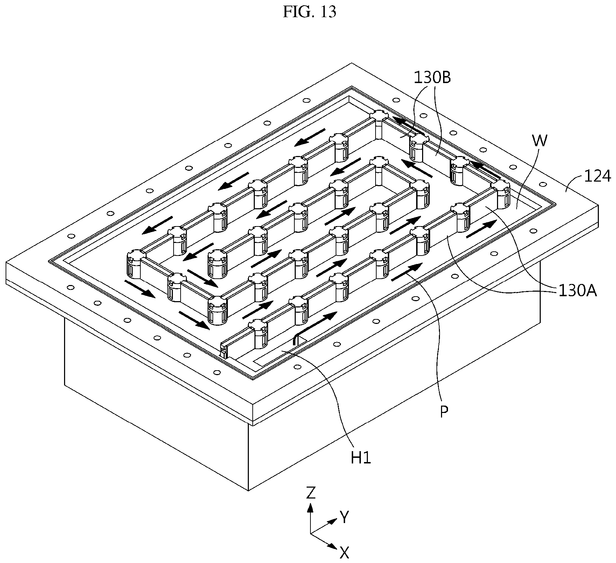

FIG. 13 is a schematic perspective view showing some components of the battery module according to another embodiment of the present disclosure.

Referring to FIG. 13 together with FIG. 1, the battery module 100 according to another embodiment of the present disclosure may have an outlet (not shown) of the upper cover 126 at the center. In this case, the present disclosure may have the movement passage P configured for movement of gas and flame in an approximately spiral shape on the plane from the connection hole H1 of the upper case 124 to the outlet H2. Accordingly, the battery module 100 of the present disclosure may include at least two partitions 130A, 130B. Any one 130A of the at least two partitions 130 may be extended in any one direction to form the movement passage P. The other partition 130B may be coupled to the end of the any one partition 130A and may be extended in a direction perpendicular to the extension direction of the any one partition 130A.

For example, as shown in FIG. 13, the battery module 100 may include 28 partitions 130A, 130B mounted on the upper case 124. Each of the 28 partitions 130A, 130B may be coupled to the other partition 130A or 130B. In this instance, 22 partitions 130A may be extended in the front-rear direction (Y axis direction) to form the movement passage P, and 6 partitions 130B may be extended in the left-right direction perpendicular to the extension direction of the 22 partitions 130A.

Accordingly, according to this configuration of the present disclosure, in the battery module 100 of the present disclosure, in case that there is a change in the position of the outlet H2, the plurality of partitions 130 may be extended in a direction or a direction perpendicular to the direction, and thus the movement passage P may be formed such that it is connected to the changed outlet H2. Accordingly, the battery module 100 of the present disclosure does not need to change the design of the partition 130 that forms the movement passage P connected from the connection hole H1 to the outlet H2, thereby effectively reducing the fabrication cost and time. That is, the partition 130 of the present disclosure may be applied to all the battery modules 100 of various capacities, and thus component standardization is easy and straightforward.

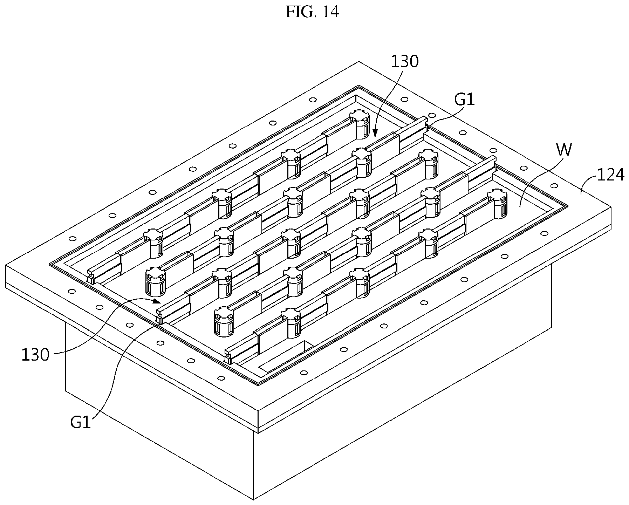

FIG. 14 is a schematic perspective view showing some components of the battery module according to still another embodiment of the present disclosure.

Referring to FIG. 14 together with FIGS. 1, 4 and 6, the battery module 100 according to still another embodiment of the present disclosure may include at least two partitions 130. The at least two partitions 130 may be spaced at a predetermined distance apart in the left-right direction (X axis direction) in the buffer space S2 by the recess W. Any one of the at least two partitions 130 may be spaced a predetermined distance from one surface (the rear surface) of the buffer space S2, and the other partition 130 may be spaced a predetermined distance from the other surface (the front surface) of the buffer space S2.

For example, as shown in FIG. 14, 20 partitions 130 may be configured to form the movement passage P in a zigzag pattern in the front-rear direction. In this instance, the 20 partitions 130 may form five groups coupled to each other. Each of the five groups may be positioned such that the end is inserted into the insert groove G1 formed on the front side or the insert groove G1 formed on the rear side in an alternating manner. That is, among the five groups, each including four partitions 130, any one group may be spaced the predetermined distance apart from the rear surface of the buffer space S2. The other group may be spaced apart from the above-described group in the left direction and may be spaced the predetermined distance apart from the front surface of the buffer space S2. The five groups, each including four partitions 130, may be arranged in a zigzag pattern in the front-rear direction.

Additionally, each of the 20 partitions 130 may be positioned such that the extension part 133 protrudes in at least one direction from the barrier 131. For example, the partition 130 may be positioned such that the extension part 133 protrudes in the front or rear direction from the barrier 131.

Accordingly, according to this configuration of the present disclosure, since the partition 130 of the present disclosure includes the extension part 133 protruding from the barrier 131 to further extend the movement passage P, it is possible to form the movement passage P of the same length in the buffer space S2 using a smaller number of partitions 130. That is, when the battery capacity of the battery module 100 is relatively low, in case of fire or explosion, the power of explosion may be relatively low, and thus it is possible to reduce the number of partitions 130 that form the movement passage P for movement of flame and gas. That is, the battery module 100 of the present disclosure may form the movement passage P of the same length using a relatively small number of partitions 130, thereby effectively reducing the number of components and the fabrication cost of the battery module 100.

Meanwhile, a battery pack (not shown) according to an embodiment of the present disclosure includes at least one battery module 100.

Additionally, the battery pack may further include various types of devices (not shown) for controlling the charge/discharge of the battery module 100, for example, a Battery Management System (BMS), a current sensor, a fuse and the like.

Additionally, a vehicle according to an embodiment of the present disclosure includes the battery pack. For example, the vehicle may be an electric vehicle or a hybrid electric vehicle. For example, the vehicle according to an embodiment of the present disclosure may include the battery pack according to an embodiment of the present disclosure in the vehicle body.

The terms indicating direction as used herein such as upper, lower, left, right, front and rear are used for convenience of description only, and it is obvious to those skilled in the art that the term may change depending on the position of the stated element or an observer.

**[Description of Reference Numerals]**

| | | | |
|---|---|---|---|
| 100: | Battery module | 110: | Cell assembly |
| 111: | Battery cell | | |
| 122: | Lower case | 124: | Upper case |
| 126: | Upper cover | | |
| S1, S2: | Accommodation space, Buffer space | | |
| H1, H2, H3, H4, H5: | Connection hole, Outlet, First bolt hole, Second bolt hole, Third bolt hole | | |
| B, N: | Bolt, Nut | | |
| 130: | Partition | P: | Movement passage |
| 131: | Barrier | 132: | Hinge |
| 133: | Extension part | 131h1: | Accommodation groove |
| 133p1: | Coupling protrusion | 132h: | Coupling groove |
| 133p2: | Slide protrusion | 131h2: | Slide groove |
| G1, G2: | Insert groove, Mount groove | W: | Recess |
| 140, 142: | Busbar assembly, Busbar frame | | |

## Claims

1. A battery module (100), comprising:
a cell assembly (110) including a plurality of battery cells (111);
a lower case (122) having an open top and an accommodation space (S1) in which the cell assembly is received;
an upper case (124) which is coupled to the lower case to cover the open top of the lower case, the upper case having a connection hole (H1) in communication with the accommodation space;
an upper cover (126) which is coupled to the upper case to cover the top of the upper case, wherein part of the upper cover is spaced apart from the upper case to form a buffer space (S2), and the upper cover has an outlet (H2) in communication with the buffer space; and
a partition (130) which is provided in the buffer space, the partition having at least part extended to form a movement passage for movement of gas and flame which extends from the connection hole to the outlet, and configured to adjust an extension direction of the part, wherein the partition includes:
a barrier (131) which is extended in at least one direction; and
a hinge (132) which is hinge-coupled to an end of the barrier to allow the barrier to rotatably move;
wherein the partition further includes an extension part (133) configured to protrude in at least one direction from the barrier, and
the barrier includes an accommodation groove (131h1) which has a space into which the extension part is inserted and configured to allow the extension part to move in a protrusion direction when the extension part is inserted into the accommodation groove.

2. The battery module according to claim 1, wherein the battery module includes at least two partitions, and
the partition includes:
at least one coupling groove (132h) in at least part thereof, and
at least one coupling protrusion (133p1) which is inserted into the coupling groove formed in the hinge of the other partition at an end of a protrusion direction of the extension part.

3. The battery module according to claim 1, wherein at least one of the upper cover or the upper case has an insert groove (G1) into which an end of an extension direction of the barrier is inserted.

4. The battery module according to claim 1, wherein at least one of the upper cover or the upper case has a mount groove (G2) into which a top or bottom of the partition is inserted.

5. The battery module according to claim 1, wherein the battery module includes at least two partitions,
any one of the at least two partitions is extended in a direction to form the movement passage, and
the other partition is coupled to an end of the any one partition and is extended a direction perpendicular to an extension direction of the any one partition.

6. The battery module according to claim 1, wherein the battery module includes at least two partitions,
the at least two partitions are spaced a predetermined distance apart in the buffer space, and
any one of the at least two partitions is spaced a predetermined distance apart from a surface of the buffer space, and the other partition is spaced a predetermined distance apart from the other surface of the buffer space.

7. A battery pack comprising at least one battery module according to any one of claims 1 to 6.

8. A vehicle comprising at least one battery pack according to claim 7.

## Patentansprüche

1. Batteriemodul (100), umfassend:
eine Zellenanordnung (110), welche eine Mehrzahl von Batteriezellen (111) umfasst;
ein unteres Gehäuse (122), welches eine offene Oberseite und einen Aufnahmeraum (S1) umfasst, in welchem die Zellenanordnung aufgenommen ist;
ein oberes Gehäuse (124), welches mit dem unteren Gehäuse gekoppelt ist, um die offene Oberseite des unteren Gehäuses abzudecken, wobei das obere Gehäuse ein Verbindungsloch (H1) aufweist, welches in Kommunikation mit dem Aufnahmeraum ist;
eine obere Abdeckung (126), welche mit dem oberen Gehäuse gekoppelt ist, um die Oberseite des oberen Gehäuses abzudecken, wobei ein Teil der oberen Abdeckung von dem oberen Gehäuse beabstandet ist, um einen Pufferraum (S2) zu bilden, und die obere Abdeckung einen Auslass (H2) umfasst, welcher in Kommunikation mit dem Pufferraum ist; und
eine Trennwand (130), welche in dem Pufferraum bereitgestellt ist, wobei die Trennwand wenigstens einen Teil aufweist, welcher sich derart erstreckt, dass er einen Bewegungskanal für eine Bewegung von Gas und Flammen bildet, welcher sich von dem Verbindungsloch zu dem Auslass erstreckt, und dazu eingerichtet ist, eine Erstreckungsrichtung des Teils anzupassen, wobei die Trennwand umfasst:
eine Barriere (131), welche sich in wenigstens einer Richtung erstreckt; und
ein Scharnier (132), welches mit einem Ende der Barriere scharniergekoppelt ist, um zu ermöglichen, dass sich die Barriere drehbar bewegt;
wobei die Trennwand ferner einen Erstreckungsteil (133) umfasst, welcher dazu eingerichtet ist, in wenigstens einer Richtung von der Barriere vorzustehen, und
die Barriere eine Aufnahmenut (131h1) umfasst, welche einen Raum aufweist, in welchen der Erstreckungsteil eingesetzt ist, und dazu eingerichtet ist, zu ermöglichen, dass sich der Erstreckungsteil in einer Vorsprungsrichtung bewegt, wenn der Erstreckungsteil in die Aufnahmenut eingesetzt ist.

2. Batteriemodul nach Anspruch 1, wobei das Batteriemodul wenigstens zwei Trennwände umfasst und
die Trennwand umfasst:
wenigstens eine Kopplungsnut (132h) in wenigstens einem Teil davon und
wenigstens einen Kopplungsvorsprung (133p1), welcher in die Kopplungsnut eingesetzt ist, welche an einem Ende einer Vorsprungsrichtung des Erstreckungsteils in dem Scharnier der anderen Trennwand gebildet ist.

3. Batteriemodul nach Anspruch 1, wobei wenigstens eines aus der oberen Abdeckung oder dem oberen Gehäuse eine Einsatznut (G1) aufweist, in welche ein Ende einer Erstreckungsrichtung der Barriere eingesetzt ist.

4. Batteriemodul nach Anspruch 1, wobei wenigstens eines aus der oberen Abdeckung oder dem oberen Gehäuse eine Montagenut (G2) aufweist, in welche eine Oberseite oder eine Unterseite der Trennwand eingesetzt ist.

5. Batteriemodul nach Anspruch 1, wobei das Batteriemodul wenigstens zwei Trennwände umfasst,
sich eine der wenigstens zwei Trennwände in einer Richtung erstreckt, um den Bewegungskanal zu bilden, und
die andere Trennwand mit einem Ende der einen Trennwand gekoppelt ist und sich in einer Richtung erstreckt, welche senkrecht zu einer Erstreckungsrichtung der einen Trennwand ist.

6. Batteriemodul nach Anspruch 1, wobei das Batteriemodul wenigstens zwei Trennwände umfasst,
die wenigstens zwei Trennwände in dem Pufferraum in einem vorbestimmten Abstand voneinander beabstandet sind und
eine der wenigstens zwei Trennwände in einem vorbestimmten Abstand von einer Fläche des Pufferraums beabstandet ist und die andere Trennwand in einem vorbestimmten Abstand von der anderen Fläche des Pufferraums beabstandet ist.

7. Batteriepack, umfassend wenigstens ein Batteriemodul nach einem der Ansprüche 1 bis 6.

8. Fahrzeug, umfassend wenigstens einen Batteriepack nach Anspruch 7.

## Revendications

1. Module de batterie (100), comprenant :
un ensemble de cellules (110) comportant une pluralité de cellules de batterie (111) ;
un boîtier inférieur (122) présentant une partie supérieure ouverte et un espace de logement (S1) dans lequel est reçu l'ensemble de cellules ;
un boîtier supérieur (124) qui est couplé au boîtier inférieur pour recouvrir la partie supérieure ouverte du boîtier inférieur, le boîtier supérieur présentant un orifice de raccordement (H1) en communication avec l'espace de logement ;
un couvercle supérieur (126) qui est couplé au boîtier supérieur pour recouvrir la partie supérieure du boîtier supérieur, dans lequel une partie du couvercle supérieur est espacée du boîtier supérieur pour former un espace tampon (S2), et le couvercle supérieur présente une sortie (H2) en communication avec l'espace tampon ; et
une cloison (130) qui est prévue dans l'espace tampon, la cloison présentant au moins une partie étendue pour former un passage de mouvement pour le mouvement de gaz et de flamme qui s'étend de l'orifice de raccordement à la sortie, et configurée pour ajuster une direction d'extension de la partie, dans lequel la cloison comporte :
une barrière (131) qui s'étend dans au moins une direction ; et
une charnière (132) qui est couplée de façon articulée à une extrémité de la barrière pour permettre à la barrière de se déplacer de manière rotative ;
dans lequel la cloison comporte en outre une partie d'extension (133) configurée pour faire saillie dans au moins une direction à partir de la barrière, et
la barrière comporte une rainure de logement (131h1) qui présente un espace dans lequel la partie d'extension est insérée et configurée pour permettre à la partie d'extension de se déplacer dans une direction de saillie lorsque la partie d'extension est insérée dans la rainure de logement.

2. Module de batterie selon la revendication 1, dans lequel le module de batterie comporte au moins deux cloisons, et
la cloison comporte :
au moins une rainure de couplage (132h) dans au moins une partie de celle-ci, et
au moins une saillie de couplage (133p1) qui est insérée dans la rainure de couplage formée dans la charnière de l'autre cloison à une extrémité d'une direction de saillie de la partie d'extension.

3. Module de batterie selon la revendication 1, dans lequel au moins un parmi le couvercle supérieur ou le boîtier supérieur présente une rainure d'insertion (G1) dans laquelle est insérée une extrémité d'une direction d'extension de la barrière.

4. Module de batterie selon la revendication 1, dans lequel au moins un parmi le couvercle supérieur ou le boîtier supérieur présente une rainure de montage (G2) dans laquelle est insérée une partie supérieure ou une partie inférieure de la cloison.

5. Module de batterie selon la revendication 1, dans lequel le module de batterie comporte au moins deux cloisons,
une cloison quelconque parmi les au moins deux cloisons s'étend dans une direction pour former le passage de mouvement, et
l'autre cloison est couplée à une extrémité de la cloison quelconque et s'étend dans une direction perpendiculaire à une direction d'extension de la cloison quelconque.

6. Module de batterie selon la revendication 1, dans lequel le module de batterie comporte au moins deux cloisons,
les au moins deux cloisons sont espacées d'une distance prédéterminée dans l'espace tampon, et
une cloison quelconque parmi les au moins deux cloisons est espacée d'une distance prédéterminée d'une surface de l'espace tampon, et l'autre cloison est espacée d'une distance prédéterminée de l'autre surface de l'espace tampon.

7. Bloc-batterie comprenant au moins un module de batterie selon l'une quelconque des revendications 1 à 6.

8. Véhicule comprenant au moins un bloc-batterie selon la revendication 7.
